# FASCICULE DE BREVET EUROPEEN

(11) **EP 1 385 258 B1**
(45) Date de publication et mention de la délivrance du brevet: **15.04.2009**
(21) Numéro de dépôt: 03291816.1
(22) Date de dépôt: 22.07.2003
(51) Int. Cl.: H02M 5/27

(54) **Interface d'alimentation d'une charge depuis un réseau d'alimentation électrique**
Schnittstelle zur Stromversorgung einer Last von einem elektrischen Netzwerk
Interface for supplying a load from a power distribution network

(30) Priorité: 26.07.2002 FR 0209561
(43) Date de publication de la demande: 28.01.2004
(73) Titulaire: TECHNOFAN, 31700 Blagnac (FR)
(72) Inventeur: Cester, Christophe, 31700 Blagnac (FR)
(74) Mandataire: Blot, Philippe Robert Emile

(56) Documents cités:
- WO-A-00/36738
- SEWAN CHOI ET AL: "Polyphase transformer arrangements with reduced kVA capacities for harmonic current reduction in rectifier type utility interface" POWER ELECTRONICS SPECIALISTS CONFERENCE, 1995. PESC '95 RECORD., 26TH ANNUAL IEEE ATLANTA, GA, USA 18-22 JUNE 1995, NEW YORK, NY, USA,IEEE, US, 18 juin 1995 (1995-06-18), pages 353-359, XP010150581 ISBN: 0-7803-2730-6

## Description

La présente invention concerne une interface d'alimentation d'une charge depuis un réseau d'alimentation électrique du type comportant :
- un étage de redressement comprenant un autotransformateur équipé d'au moins un enroulement primaire propre à être relié au réseau d'alimentation ; et
- un étage de conditionnement du signal d'alimentation présentant une sortie d'alimentation de la charge, lequel étage de conditionnement du signal d'alimentation comporte, d'une part, un module de puissance pour le conditionnement du signal d'alimentation relié en sortie de l'étage de redressement et, d'autre part, un module de commande propre à assurer le pilotage du module de puissance.

Dans certaines installations, des charges telles que, par exemple, des moteurs électriques sont alimentées depuis un réseau local d'alimentation électrique.

Tel est le cas, par exemple, dans un avion où l'avion est équipé d'un réseau triphasé interne. Ce réseau est alimenté depuis des alternateurs associés aux réacteurs de l'appareil. La fréquence du courant électrique sur le réseau d'alimentation peut être variable.

Afin d'assurer l'alimentation d'une charge, il est connu de prévoir, entre la charge et le réseau d'alimentation, une interface d'alimentation assurant un redressement de la tension issue du réseau d'alimentation puis un conditionnement du courant électrique pour alimenter de manière satisfaisante la charge connectée.

En particulier, une telle interface comprend avantageusement un étage de redressement intégrant un autotransformateur à redressement polyphasé, et notamment un autotransformateur dodécaphasé.

Cet autotransformateur constitue un filtre permettant de limiter les harmoniques générées sur le réseau d'alimentation par les moyens de redressement. Un tel filtre permet notamment d'éliminer totalement certaines harmoniques du courant absorbé et de réduire les autres harmoniques.

L'étage suivant de l'interface assure le conditionnement du courant. Il est formé par exemple d'un onduleur. Celui-ci comporte un module de puissance regroupant les composants électroniques au travers desquels circule le courant d'alimentation de la charge et un module de commande assurant le pilotage des composants électroniques du module de puissance. Ce module de commande comporte parfois également d'autres moyens pour le pilotage et/ou l'alimentation d'organes auxiliaires.

Le module de commande nécessite, pour son fonctionnement, d'être alimenté depuis une source basse tension isolée du réseau d'alimentation électrique principale pour des raisons de sécurité. L'alimentation du module de commande est ainsi réalisée, soit à partir d'un réseau basse tension distinct du réseau d'alimentation électrique présent dans l'avion, soit directement à partir du réseau d'alimentation électrique principal alimentant l'étage de redressement, par l'intermédiaire d'un transformateur de faible puissance abaissant et isolant la tension d'entrée.

Une telle interface d'alimentation est relativement lourde et encombrante du fait des alimentations distinctes nécessaires à l'étage de redressement et au module de commande de l'étage de conditionnement du courant.

L'invention a pour but de proposer une interface d'alimentation d'une charge depuis un réseau d'alimentation électrique qui soit d'un poids réduit.

A cet effet, l'invention a pour objet une interface d'alimentation du type précité, caractérisée en ce que l'autotransformateur comporte au moins un enroulement supplémentaire connecté au module de commande pour son alimentation en énergie électrique, le ou chaque enroulement supplémentaire étant couplé magnétiquement à au moins un enroulement primaire de l'autotransformateur.

Suivant des modes particuliers de réalisation, l'interface d'alimentation comporte l'une ou plusieurs des caractéristiques suivantes :
- l'autotransformateur est un transformateur polyphasé, et il comporte au moins un enroulement supplémentaire prévu pour chaque phase du transformateur.
- l'autotransformateur est un transformateur à sortie hexaphasée ;
- le module de commande comporte un module de mise en forme du signal relié au ou à chaque enroulement supplémentaire ; et
- l'autotransformateur comporte au moins deux enroulements supplémentaires ayant des nombres de spires différents propres à assurer l'alimentation du module de commande avec deux tensions distinctes.

L'invention a également pour objet un engin de transport comportant un réseau d'alimentation électrique et au moins une charge reliée au réseau d'alimentation électrique au travers d'une interface d'alimentation telle que définie ci-dessus.

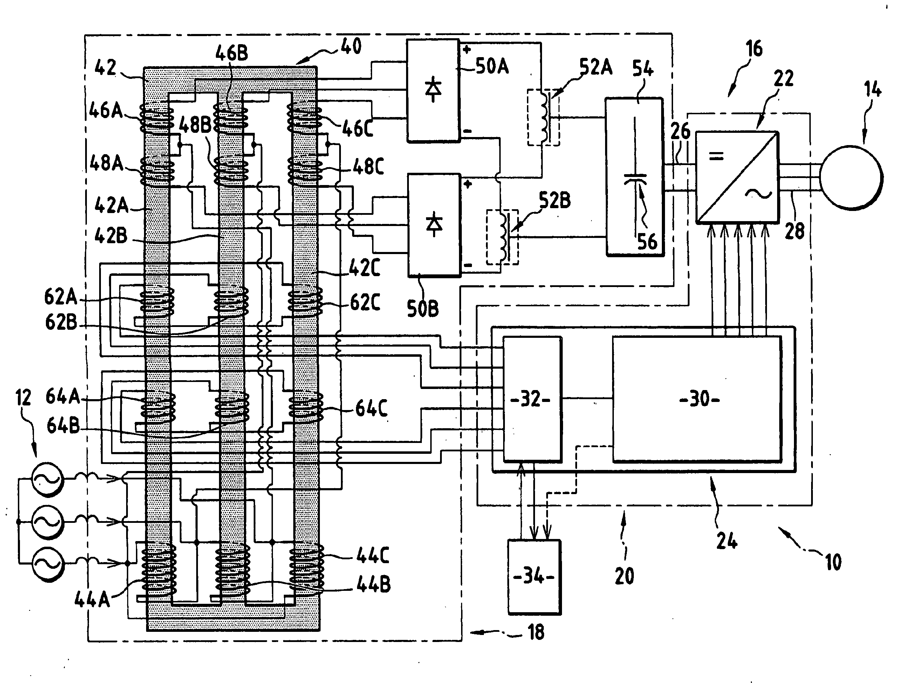

L'invention sera mieux comprise à la lecture de la description qui va suivre, donnée uniquement à titre d'exemple, et faite en se référant au dessin qui est une vue schématique d'une installation électrique d'un avion incorporant une interface d'alimentation d'une charge selon l'invention.

L'installation 10 représentée est supposée incorporée dans un engin de transport, et notamment dans un avion.

Cette installation comporte un réseau d'alimentation 12, une charge 14 connectée au réseau d'alimentation et une interface 16 interposée entre le réseau d'alimentation 12 et la charge 14, afin d'assurer l'alimentation de cette dernière.

La charge 14 est constituée par exemple d'un moteur électrique triphasé. Le réseau d'alimentation 12 est constitué par exemple d'un réseau d'alimentation triphasé de fréquence variable, la tension nominale étant par exemple égale à 115/200 volts.

L'interface d'alimentation comporte un étage de redressement 18 connecté au réseau d'alimentation 12 et un étage 20 de conditionnement du courant d'alimentation dont la sortie est reliée à la charge 14. L'étage de conditionnement 20 est relié à la sortie de l'étage d'entrée de redressement 18 pour son alimentation.

Plus précisément, l'étage 20 de conditionnement du courant est constitué dans l'exemple considéré d'un onduleur ayant un module de puissance 22 et un module de commande 24.

Le module de puissance 22 est adapté pour recevoir en entrée notée 26 un courant continu et pour fournir en sortie 28 un courant triphasé d'alimentation de la charge 14. Le module de puissance 22 est propre à mettre en forme le courant d'alimentation de la charge 14 à partir d'ordres de pilotage reçus du module de commande 24. A cet effet, ce dernier comporte une unité de traitement d'informations 30 propre à élaborer et à fournir les ordres de pilotage au module de puissance 22.

Le module de commande 24 comporte en outre une unité 32 de mise en forme du courant adaptée pour recevoir en entrée un courant alternatif triphasé basse tension et pour fournir en sortie un courant basse tension propre à l'alimentation de l'unité de traitement d'informations 30. En outre, l'unité de mise en forme du courant 32 est propre à assurer l'alimentation d'organes auxiliaires 34 pilotés ou non depuis l'unité de traitement d'informations 30 du module de commande 24.

L'étage 18 de redressement comporte un autotransformateur à flux pulsé 40 à redressement dodécaphasé.

Un étage de redressement de ce type est décrit dans sa généralité dans l'article "Polyphase Transformer Arrangements with Reduced kVA Capacities for Harmonic Current Reduction in Rectifer-Type Utility Interface" (IEEE Transactions on Power Electronics, vol. 11, N° 5, Septembre 1996, pages 680-690). Ainsi, pour les détails de réalisation, l'homme du métier se rapportera à ce document et seuls les éléments propres à l'invention seront décrits ici en détail.

L'autotransformateur 40 comporte un noyau métallique 42 formant deux boucles magnétiques imbriquées délimitées par trois branches 42A, 42B, 42C reliées les unes aux autres par leurs extrémités.

Un enroulement primaire 44A, 44B, 44C, relié à chaque phase du réseau d'alimentation 12, est bobiné sur chaque branche 42A, 42B, 42C. Ces trois enroulements sont connectés en triangle, de sorte que les extrémités de chaque enroulement connecté au réseau d'alimentation 12 sont connectés à l'extrémité de sortie d'un autre enroulement.

En outre, chaque branche 42A, 42B, 42C comporte deux enroulements secondaires 46A, 46B, 46C et 48A, 48B, 48C reliés deux à deux en série. Ces enroulements sont connectés chacun depuis leur point médian à une phase du réseau d'alimentation 12.

Les extrémités de sortie de chaque paire de bobinages secondaires en série constituent les six phases d'un réseau d'alimentation hexaphasé formé en sortie de l'autotransformateur 40.

Les sorties des enroulements secondaires associés trois à trois sont reliées aux entrées de deux ponts de diodes 50A, 50B.

Les sorties de même polarité des ponts de diodes sont reliées aux deux bornes d'entrée d'inductance d'interphase 52A, 52B. Chaque inductance d'interphase est constituée d'un noyau magnétique sur lequel sont bobinés deux enroulements dont les sorties sont reliées ensemble, et dont les entrées constituent les points de connexion des sorties de même polarité des ponts de diodes.

Les sorties des deux inductances d'interphase sont connectées à l'entrée d'un étage de filtration 54 intégrant un condensateur 56 de stockage d'énergie.

L'entrée 26 du module de puissance 22 est reliée à la sortie de l'étage de filtration 54 pour l'alimentation en courant continu du module de puissance.

En outre, et selon l'invention, le module de commande 24 de l'étage 20 de conditionnement du courant est alimenté en courant basse tension depuis un groupe d'enroulements supplémentaires bobinés autour des branches 42A, 42B, 42C de l'autotransformateur.

Plus précisément, l'autotransformateur 40 présente, sur chacune de ses branches 42A, 42B, 42C, trois enroulements 62A, 62B, 62C connectés ensemble en étoile depuis une première extrémité commune, l'autre extrémité de chaque enroulement étant reliée à l'unité 32 de mise en forme du courant du module de commande 24. Ces enroulements ont tous le même nombre de spires.

En outre, trois autres bobinages supplémentaires 64A, 64B, 64C sont bobinés autour des branches 42A, 42B, 42C. Ceux-ci ont chacun un nombre de spires égal différent du nombre de spires des enroulements 62A, 62B, 62C. Ces enroulements sont également reliés en étoile et connectés au module 32.

Lors de l'alimentation de l'autotransformateur 40 depuis le réseau d'alimentation 12, une partie de la puissance issue du réseau est convertie en courant continu et transmise au module de puissance 22 pour être mise en forme en vue de l'alimentation du moteur 14.

En outre, une partie de l'énergie est transmise aux enroulements 62A, 62B, 62C et 64A, 64B, 64C du fait de leur couplage magnétique avec les enroulements primaires. Le courant triphasé prenant naissance dans ces enroulements est appliqué à l'unité 32 afin d'assurer l'alimentation autonome du module de commande 24.

Ces deux séries de trois enroulements assurent la fourniture de deux tensions alternatives différentes au module de commande 24. Après mise en forme des courants reçus, ces deux courants assurent l'alimentation de l'unité de traitement d'informations 30 du module de commande 24.

Ainsi, on conçoit qu'avec un tel agencement, le même circuit magnétique de l'autotransformateur est utilisé pour créer des sources de tension triphasées isolées du réseau assurant l'alimentation du module de commande 24, permettant de s'affranchir d'un transformateur supplémentaire propre à l'alimentation isolée du module de commande 24. Ainsi, le poids de l'interface d'alimentation est réduit.

L'invention a été décrite ici avec un transformateur à sortie hexaphasée. Toutefois, celle-ci peut être mise en oeuvre avec un transformateur à neuf phases de sortie.

Par ailleurs un unique enroulement supplémentaire peut être prévu dans l'autotransformateur, créant ainsi une source d'alimentation monophasée du module de commande 24.

## Revendications

1. Interface (10) d'alimentation d'une charge (14) depuis un réseau d'alimentation électrique (12) comportant :
- un étage (18) de redressement comprenant un autotransformateur (40) équipé d'au moins un enroulement primaire (44A, 44B, 44C) propre à être relié au réseau d'alimentation (12) ; et
- un étage (20) de conditionnement du signal d'alimentation présentant une sortie (28) d'alimentation de la charge (14), lequel étage (20) de conditionnement du signal d'alimentation comporte, d'une part, un module de puissance (22) pour le conditionnement du signal d'alimentation relié en sortie de l'étage de redressement (18) et, d'autre part, un module de commande (24) propre à assurer le pilotage du module de puissance (22), **caractérisée en ce que** l'autotransformateur (40) comporte au moins un enroulement supplémentaire (62A, 628, 62C ; 64A, 64B, 64C) connecté au module de commande (24) pour son alimentation en énergie électrique, le ou chaque enroulement supplémentaire (62A, 628, 62C ; 64A, 64B, 64C) étant couplé magnétiquement à au moins un enroulement primaire (44A, 44B, 44C) de l'autotransformateur (40).

2. Interface d'alimentation selon la revendication 1, **caractérisée en ce que** l'autotransformateur (40) est un transformateur polyphasé, et **en ce qu'**il comporte au moins un enroulement supplémentaire (62A, 62B, 62C : 64A, 64B, 64C) prévu pour chaque phase du transformateur.

3. Interface d'alimentation selon la revendication 2, **caractérisée en ce que** l'autotransformateur est un transformateur à sortie hexaphasée (40).

4. Interface d'alimentation selon l'une quelconque des revendications précédentes, **caractérisée en ce que** le module de commande (24) comporte un module (32) de mise en forme dû signal relié au ou à chaque enroulement supplémentaire (62A, 62B, 62C ; 64A, 64B, 64C).

5. Interface d'alimentation selon l'une quelconque des revendications précédentes, **caractérisée en ce que** l'autotransformateur (40) comporte au moins deux enroulements supplémentaires (62A, 62B, 62C ; 64A, 64B, 64C) ayant des nombres de spires différents propres à assurer l'alimentation du module de commande (24) avec deux tensions distinctes.

6. Engin de transport comportant un réseau d'alimentation électrique (12) et au moins une charge (14) reliée au réseau d'alimentation électrique (12) au travers d'une interface d'alimentation selon l'une quelconque des revendications précédentes.

## Claims

1. Interface (10) for supplying a load (14) from an electrical power supply network (12) comprising:
- a rectification stage (18) comprising an autotransformer (40) which is provided with at least one primary winding (44A, 44B, 44C) which can be connected to the electrical power supply network (12); and
- a stage (20) for conditioning the electrical power supply signal having an output (28) for supplying the load (14), which stage (20) for conditioning the electrical power supply signal comprises, on the one hand, a power module (22) for conditioning the electrical power supply signal which is connected at the output of the rectification stage (18) and, on the other hand, a control module (24) which is able to control the power module (22),
**characterised in that** the autotransformer (40) comprises at least one additional winding (62A, 62B, 62C; 64A, 64B, 64C) which is connected to the control module (24) in order to be supplied with electrical energy, the or each additional winding (62A, 62B, 62C; 64A, 64B, 64C) being magnetically connected to at least one primary winding (44A, 44B, 44C) of the autotransformer (40).

2. Electrical power supply interface according to claim 1, **characterised in that** the autotransformer (40) is a multi-phase transformer, and **in that** it comprises at least one additional winding (62A, 62B, 62C; 64A, 64B, 64C) which is provided for each phase of the transformer.

3. Electrical power supply interface according to claim 2, **characterised in that** the autotransformer is a six-phase output transformer (40).

4. Electrical power supply interface according to any one of the preceding claims, **characterised in that** the control module (24) comprises a module (32) for smoothing the signal connected to the or each additional winding (62A, 62B, 62C; 64A, 64B, 64C).

5. Electrical power supply interface according to any one of the preceding claims, **characterised in that** the autotransformer (40) comprises at least two additional windings (62A, 62B, 62C; 64A, 64B, 64C) having different numbers of turns which are capable of ensuring that the control module (24) is supplied with electrical power at two different voltages.

6. Transport means comprising an electrical power supply network (12) and at least one load (14) which is connected to the electrical power supply network (12) via an electrical power supply interface according to any one of the preceding claims.

## Patentansprüche

1. Schnittstelle (10) für die Versorgung einer Last (14) aus einem Stromversorgungsnetzwerk (12), aufweisend:
- eine Gleichrichtungsstufe (18), die einen Autotransformator (40) aufweist, der mindestens eine Primärwicklung (44A, 44B, 44C) aufweist, eingerichtet zum Koppeln mit dem Versorgungsnetz (12), und
- eine Stufe (20) zur Aufbereitung des Versorgungssignals, die einen Ausgang (28) für die Versorgung der Last (14) aufweist, wobei die Stufe (20) zur Aufbereitung des Versorgungssignals einerseits ein mit dem Ausgang der Gleichrichtungsstufe (18) gekoppeltes Leistungsmodul (22) für die Aufbereitung des Versorgungssignals, und andererseits ein Steuermodul (24) aufweist, das eingerichtet ist zur Gewährleistung der Steuerung des Leistungsmoduls (22), **dadurch gekennzeichnet, dass** der Autotransformator (40) mindestens eine zusätzliche Wicklung (62A, 62B, 62C; 64A, 64B, 64C) aufweist, die mit dem Steuermodul (24) für dessen Versorgung mit elektrischer Energie gekoppelt ist, wobei die oder jede zusätzliche Wicklung (62A, 62B, 62C; 64A, 64B, 64C) magnetisch mit mindestens einer Primärwicklung (44A, 44B, 44C) des Autotransformators (40) gekoppelt ist.

2. Versorgungsschnittstelle nach Anspruch 1, **dadurch gekennzeichnet, dass** der Autotransformator (40) ein Mehrphasentransformator ist, und dass er mindestens eine für jede Transformatorphase vorgesehene zusätzliche Wicklung (62A, 62B, 62C; 64A, 64B, 64C)) aufweist.

3. Versorgungsschnittstelle nach Anspruch 2, **dadurch gekennzeichnet, dass** der Autotransformator ein Transformator mit Sechsphasenausgang (40) ist.

4. Versorgungsschnittstelle nach einem der vorhergehenden Ansprüche, **dadurch gekennzeichnet, dass** das Steuermodul (24) ein Modul (32) zur Aufbereitung des Signals aufweist, das mit der und jeder zusätzlichen Wicklung (62A, 62B, 62C; 64A, 64B, 64C) gekoppelt ist.

5. Versorgungsschnittstelle nach einem der vorhergehenden Ansprüche, **dadurch gekennzeichnet, dass** der Autotransformator (40) mindestens zwei zusätzliche Wicklungen (62A, 62B, 62C; 64A, 64B, 64C) mit verschiedenen Anzahlen von Windungen aufweist, die eingerichtet sind zum Gewährleisten der Versorgung des Steuermoduls (24) mit zwei unterschiedlichen Spannungen.

6. Transportgerät, welches ein elektrisches Versorgungsnetz (12) und mindestens eine Last (14) aufweist, die mit dem elektrischen Versorgungsnetz (12) über eine Versorgungsschnittstelle gemäß einem der vorhergehenden Ansprüche gekoppelt ist.
